# EUROPÄISCHE PATENTSCHRIFT

(11) **EP 0 974 748 B1**
(45) Veröffentlichungstag und Bekanntmachung des Hinweises auf die Patenterteilung: **13.10.2004**
(21) Anmeldenummer: 99113493.3
(22) Anmeldetag: 13.07.1999
(51) Int. Cl.: F02M 25/07, F02B 31/08

(54) **Hubkolben-Brennkraftmaschine mit Abgasrückführung**
Reciprocating piston engine with exhaust gas recirculation
Moteur à piston alternatif avec recirculation de gaz d'échappement

(30) Priorität: 24.07.1998 DE 19833325
(43) Veröffentlichungstag der Anmeldung: 26.01.2000
(73) Patentinhaber: ADAM OPEL AG, 65423 Rüsselsheim (DE)
(72) Erfinder: Overhaus, Thomas, Dipl.-Ing., 55270 Ober-Olm (DE)
(74) Vertreter: Daniel, Ulrich W.P.

(56) Entgegenhaltungen:
- EP-A- 0 594 462
- PATENT ABSTRACTS OF JAPAN vol. 016, no. 311 (M-1277), 8. Juli 1992 (1992-07-08) & JP 04 086363 A (TOYOTA MOTOR CORP), 18. März 1992 (1992-03-18)
- PATENT ABSTRACTS OF JAPAN vol. 017, no. 479 (M-1471), 31. August 1993 (1993-08-31) & JP 05 113154 A (TOYOTA MOTOR CORP), 7. Mai 1993 (1993-05-07)
- PATENT ABSTRACTS OF JAPAN vol. 018, no. 341 (M-1629), 28. Juni 1994 (1994-06-28) & JP 06 081720 A (TOYOTA AUTOM LOOM WORKS LTD), 22. März 1994 (1994-03-22)

## Beschreibung

Die Erfindung betrifft eine Hubkolben-Brennkraftmaschine nach dem Oberbegriff des Patentanspruches 1.

Eine Brennkraftmaschine dieser Art ist mit DE 38 28 742 A1 beschrieben. Bei dieser bekannten Brennkraftmaschine mit einer ersten und einer zweiten Einlaßkanaleinrichtung an jedem Zylinder ist im ersten Einlaßkanal eine Kraftstoffeinspritzdüse angeordnet und im zweiten Einlaßkanal ist stromab eines zum Absperren dieses Kanals dienenden Durchfluß-Steuerventils ein Gasauslaß vorgesehen. Dieser steht in Verbindung mit einem Abgaszuführkanal. Der Abgaszuführkanal verbindet so die zweiten Einlaßkanäle aller Zylinder. Mittels eines Abgasrückführventils ist der Abgaszuführkanal verbindbar mit einem vom Auslaßkrümmer abgezweigten Abgasrückführkanal.

Bei niedriger Motordrehzahl ist der zweite Einlaßkanal mit dem Durchfluß - Steuerventil geschlossen und bei hoher Last geöffnet. Insbesondere bei hoher Last sind damit die Einlaßkanäle aller Zylinder über den Abgaszuführkanal verbunden. Auch wenn dessen Querschnitt klein gehalten ist, tritt dadurch ein Übersprechen der Druckimpulse im Saugsystem zwischen den einzelnen Zylindern auf, welches sich negativ auf die Füllung der Zylinder auswirkt.

Mit EP 0 473 931 A2 ist ein Verfahren zur Beeinflussung der rückgeführten Abgasmenge bei einer Brennkraftmaschine beschrieben, nach dem die Menge des in den Zylinder rückgeführten Abgases in umgekehrtem Verhältnis zur Menge des zugeführten Verbrennungsgases durch einen Zusatzluftkanal stehen soll. Zur Realisierung dieses Verfahrens ist eine im Ansaugkanal angeordnete Drosselklappe mechanisch oder elektronisch so mit dem Steuerorgan zur Bemessung der rückgeführten Abgasmenge verbunden, daß mit zunehmenden Öffnen der Drosselklappe ein adäquates Schließen des Steuerorgans erfolgt. Damit wird aber ein Übersprechverhalten der Saugsysteme der einzelnen Zylinder nicht beeinflußt.

Es ist Aufgabe der Erfindung, eine Hubkolben-Brennkraftmaschine mit einem Abgasrückführsystem gemäß dem Oberbegriff des Patentanspruches 1 so weiter zu bilden, daß ein Übersprechen der Druckimpulse im Saugsystem zwischen den einzelnen Zylindern vermieden und eine Abschaltung des Füllkanals mit einfachen technischen Mitteln realisiert wird.

Diese Aufgabe wird erfindungsgemäß mit den kennzeichnenden Merkmalen des Anspruches 1 gelöst. Die Unteransprüche kennzeichnen vorteilhafte Weiterbildungen der Erfindung.

Insbesondere bei einem direkt einspritzenden Ottomotor ist es erforderlich, die Abgasrückführung schnell und mit geringer Verzögerung durch verbleibende Restgasmengen in der Abgasrückführleitung abschalten zu können. Eine solche Brennkraftmaschine wird bei Teillast mit extrem magerem Gemisch unter Beimengung von Abgas betrieben. Bei dieser Betriebsweise ist es notwendig, den Füllkanal abzuschalten, damit im offen verbleibenden Drallkanal ausreichende Gasgeschwindigkeit herrscht, um mit dem sich dann einstellenden hohen Drall der Ladung im Brennraum die Durchbrennung der Ladung bei Magerbetrieb zu gewährleisten. Wird andererseits die Brennkraftmaschine mit hoher Last betrieben, dann muß zum Erreichen der erforderlichen Füllung der Füllkanal neben dem Drallkanal geöffnet sein. Dafür werden bei der vorliegenden Erfindung erste Schaltklappen verwendet, die den Durchgang durch die jeweiligen Füllkanäle sperren oder freigeben. Gleichzeitig muß gesichert sein, daß eine negative Beeinflussung der Zylinderfüllung durch ein Übersprechen der Druckimpulse im Saugrohr zwischen den einzelnen Zylindern durch den Abgasführungskanal verhindert wird. Nach der Erfindung werden dazu zweite Schaltklappen eingesetzt, die den Durchgang durch den Abgasführungskanal von Zylinder zu Zylinder bei Lastbetrieb sperren. Dabei sind die erste und die zweite Schaltklappe jedes Zylinders so miteinander verbunden, daß bei geschlossener erster Schaltklappe die zweite Schaltklappe offen ist und umgekehrt.

Wenn sowohl in den Drallkanal als auch in den Füllkanal Abgas rückgeführt werden soll, dann kann vor der im Füllkanal befindlichen ersten Schaltklappe ebenfalls eine Abgaszuführöffnung vorgesehen sein, die dann über einen Verbindungskanal mit dem in Strömungsrichtung gesehen-, hinter der zweiten Schaltklappe liegenden Teil des Abgasführungskanals in Verbindung steht. Damit wird diese zweite Abgaszuführungsöffnung von der zweiten Schaltklappe in gleicher Weise gesteuert, wie die Öffnung zur Abgasrückführung in den Drallkanal. Das aus der Abgaszuführöffnung in den Füllkanal austretende Abgas gelangt dann über einen definierten verbleibenden Spalt der geschlossenen ersten Schaltklappe in den zugehörigen Zylinder.

In besonders vereinfachender Weise sind jeweils eine erste und eine zweite Schaltklappe auf einer gemeinsamen Welle derart befestigt, daß bei geöffnetem Durchlaß des Füllkanals der Abgasführungskanal abgesperrt ist und bei abgesperrtem Füllkanal der Abgasführungskanal frei durchgängig ist. Die Anordnung der Klappen erfolgt dabei jeweils symmetrisch zur Wellenachse, so daß Druckeinflüsse auf die Klappen momentneutral bleiben. Durch die mechanische Verbindung von jeweils einer ersten und einer zweiten Schaltklappe auf einer Welle kann der mechanische Aufwand für die Betätigung der Schaltklappen erheblich reduziert werden.

Eine weitere bauliche Vereinfachung einer gattungsgemäßen Brennkraftmaschine kann durch die Lagerung der die Schaltklappen tragenden Wellen aller Zylinder in einem Klappenflansch erfolgen. Der Klappenflansch ist zwischen dem Zylinderkopf und dem Ansaugrohr angeordnet und mit Rinnen versehen, die in Verbindung mit den benachbarten Wandungen von Ansaugrohr und Zylinderkopf den Abgasführungskanal bilden.

Es ist möglich, einen Klappenflansch für alle Zylinder der Brennkraftmaschine oder mehrere Klappenflansche jeweils für eine Gruppe von Zylindern der Brennkraftmaschine vorzusehen.

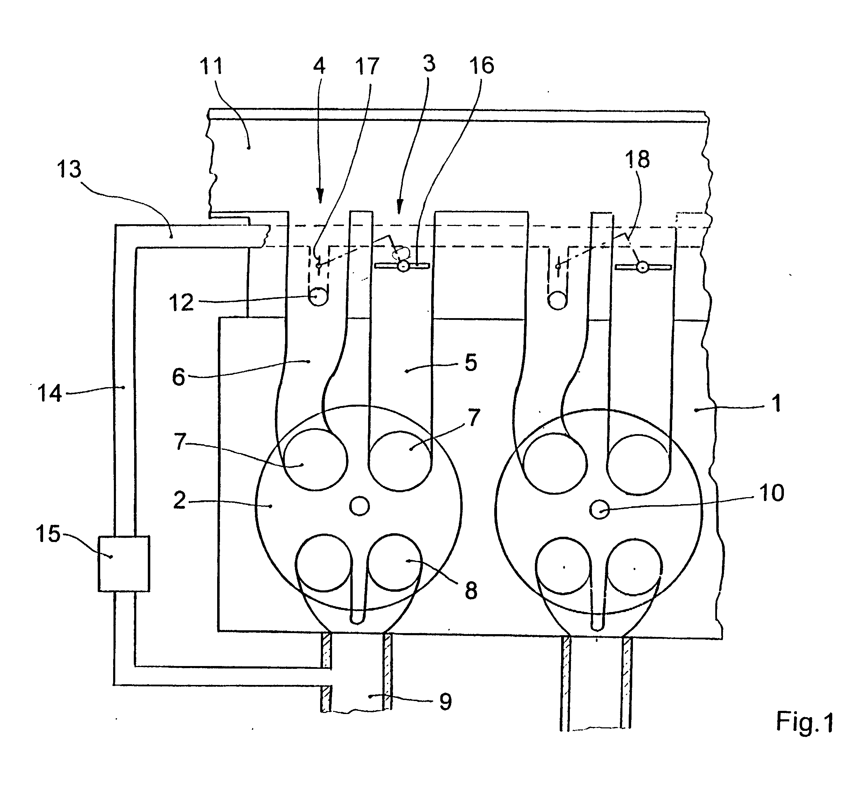

Ein Ausführungsbeispiel der Erfindung ist nachstehend anhand von Zeichnungen näher beschrieben. Es zeigen
- Fig. 1:: eine schematisierte Ansicht auf zwei in Reihe angeordnete Zylinder einer Reihen-Brennkraftmaschine;
- Fig. 2:: eine Ansicht auf einen Klappenflansch in Richtung auf die Einlaßkanaleinrichtungen;
- Fig. 3:: einen Schnitt entlang der Linie A - A in Figur 2.

Ein Zylinderkopf 1 einer Brennkraftmaschine in Reihenbauart überdeckt einen Zylinderblock mit Zylindern 2, in denen Hubkolben geführt sind, welche jeweils einen mit dem Hub veränderlichen Brennraum gemeinsam mit dem Zylinder 2 und den Zylinderkopf 1 bilden. Zu jedem Zylinder 2 führt eine erste Einlaßkanaleinrichtung 3 und eine zweite Einlaßkanaleinrichtung 4. Die erste Einlaßkanaleinrichtung 3 bildet einen Füllkanal 5. Die zweite Einlaßkanaleinrichtung 4 bildet einen Drallkanal 6. Sowohl der Füllkanal 5 als auch der Drallkanal 6 sind am Zylinder 1 jeweils mit einem Einlaßventil 7 versehen. An jedem Zylinder 2 sind weiterhin zwei Auslaßventile 8 zur Steuerung einer Auslaßkanaleinrichtung 9 vorgesehen. Die Einlaßventile 7 und die Auslaßventile 8 werden von einer nicht dargestellten Ventilbetätigungseinrichtung in Abhängigkeit von der Drehung einer Kurbelwelle der Brennkraftmaschine geöffnet und geschlossen. Jedem Zylinder 2 ist eine Kraftstoffzuführeinrichtung 10 in Form einer Einspritzdüse zugeordnet. Den Einlaßkanaleinrichtungen 3, 4 ist ein Ansaugrohr 11 zum Zuführen von Ansaugluft vorgeordnet. In jedem der Drallkanäle 6 ist eine Öffnung 12, die in Verbindung mit einem Abgasführungskanal 13 steht. Der Abgasführungskanal 13 erstreckt sich entlang des Zylinderkopfes 1 und ist mittels eines Abgasrückführkanals 14 über ein Abgasrückführventil 15 verbunden mit der Auslaßkanaleinrichtung 9. Im Verlauf der ersten Einlaßkanaleinrichtung 3 ist im Füllkanal 5 eine erste Schaltklappe 16 vorgesehen, die in eine Offenstellung und in eine Schließstellung (wie gezeichnet) bringbar ist. Zwischen der Öffnung 12 und dem Abgasführungskanal 13 ist eine zweite Schaltklappe 17 angeordnet, die ebenfalls in eine Offenstellung (wie gezeichnet) und in eine Schließstellung bringbar ist. Die Schaltklappen 16 und 17 sind durch mechanische Mittel (angedeutet durch die strichpunktierte verbindungslinie 18) so miteinander verbunden, daß bei geschlossener erster Schaltklappe 16 die zweite Schaltklappe 17 geöffnet ist und umgekehrt.

Als Mittel zur mechanischen Verbindung der beiden Schaltklappen 16, 17 eines Zylinders 2 eignet sich besonders eine gemeinsame Welle 19, die in einem Klappenflansch 20 zusammen mit den Wellen 19 der weiteren Zylinder 2 gelagert ist. Der Klappenflansch 20 ist zwischen der Einlaßseite des Zylinderkopfes 1 und dem Ansaugrohr 11 angeordnet. Er hat für jeden der anliegenden Zylinder 2 einen Füllkanaldurchbruch 21, einen Drallkanaldurchbruch 22 und einen Abgasführungskanaldurchbruch 23. Der Füllkanaldurchbruch 21 und der Abgasführungskanaldurchbruch 23 jedes Zylinders 2 befinden sich benachbart untereinander, so daß die die zugehörigen Schaltklappen 16, 17 tragende Welle 19 mittig durch diese Durchbrüche geführt werden kann. Im Klappenflansch 20 eingearbeitete Rinnen 24 bilden in Verbindung mit der am Klappenflansch 20 anliegenden Fläche der Ansaugseite des Zylinderkopfes 1 den Abgasführungskanal 13.

An den Wellen 19 sind außerhalb des Klappenflansches 20 Hebel 25 befestigt, die über eine Verbindungsschiene 26 mittels eines nicht dargestellten Aktuators in Abhängigkeit von den Betriebsbedingungen der Brennkraftmaschine gemeinsam zu betätigen sind.

Bei einem Betrieb der Brennkraftmaschine unter Vollast ist neben dem Drallkanal 6 auch der Füllkanal 5 geöffnet. Die erste Schaltklappe 16 ist somit in einer Stellung, die den Füllkanal 5 freigibt. In dieser Stellung der ersten Schaltklappe 16 ist die auf der gleichen Welle 19 befestigte zweite Schaltklappe 17 in einer Stellung, die den Zugang der Öffnung 12 vom Abgasführungskanal 13 zum Drallkanal 6 verschließt. Der Zylinder 1 kann somit aus dem Ansaugrohr 11 über den Drallkanal 6 und über den Füllkanal 5 optimal gefüllt werden. Ein Übersprechen der Druckimpulse im Saugsystem zwischen den Zylindern 1 über den Abgasführungskanal 13 ist nicht möglich, da die Verbindungen durch die zweiten Schaltklappen 17 versperrt sind.

Bei Teillast und Magerbetrieb hingegen ist der Füllkanal 5 durch die erste Schaltklappe 16 verschlossen, damit im Drallkanal 6 eine ausreichende Gasgeschwindigkeit zur Ausbildung der gewünschten Ladungskonfiguration im Zylinder 1 vorliegt. Gleichzeitig ist bei dieser Geschlossen-Stellung der ersten Schaltklappe 16 die auf der gleichen Welle 19 befestigte zweite Schaltklappe 17 in Offenstellung. Die Öffnung 12 zwischen dem Abgasführungskanal 13 und dem Drallkanal 6 ist somit frei und es kann entsprechend der Ansteuerung des Abgasrückführventils 15 durch das Motorsteuergerät der Ansaugluft Abgas beigemischt werden, welches von der Auslaßkanaleinrichtung 9 durch den Abgasrückführkanal 14 in den Abgasführungskanal 13 gelangt.

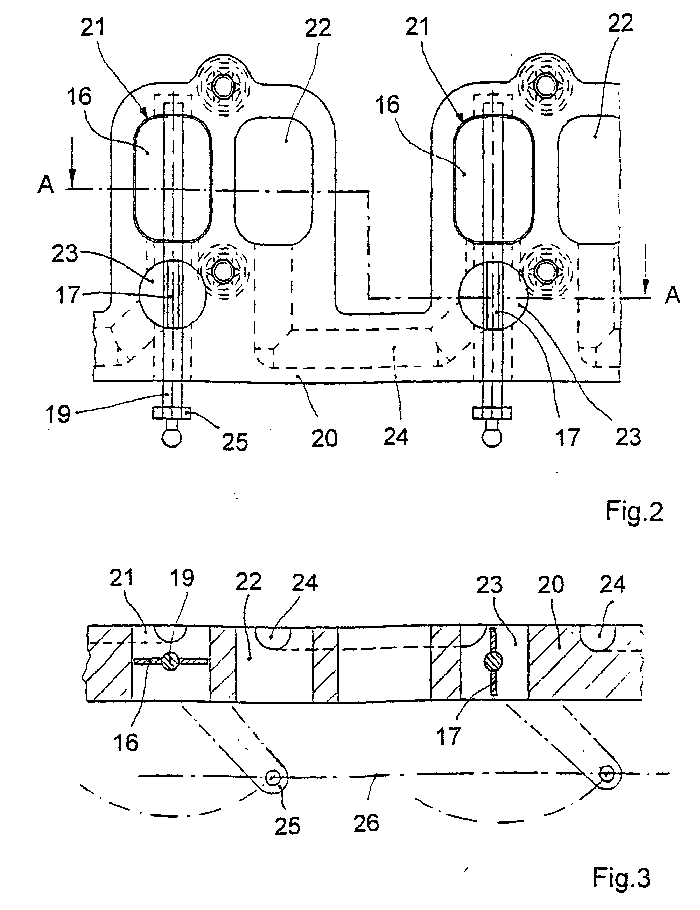

Wie Fig. 2 und 3 zeigen, kann auf einfache Weise auch dem Füllkanal 5 Abgas aus dem Abgasführungskanal 13, gesteuert durch die zweite Schaltklappe 17, zugeführt werden, indem vom Abgasführungskanal-Durchbruch 23 her durch die Rinne 24 ein Verbindungskanal vom Drallkanal zum Füllkanal gebildet wird. Das damit bei geöffneter zweiter Schaltklappe 17 vor die geschlossene erste Schaltklappe 16 geführte Abgas gelangt durch einen verbleibenden, definierten Spalt der ersten Schaltklappe 16 in den zugehörigen Zylinder 2.

Der besondere Vorteil der Erfindung ist darin zu sehen, daß bei einer gattungsgemäßen Brennkraftmaschine der Aufwand für die Schaltklappen und für deren Betätigung gegenüber bekannten Lösungen reduziert werden kann.

Mit nur einem Aktuator sind sowohl die Schaltklappen für das Versperren der Füllkanäle als auch die für das Verlegen des Abgasführungskanals zwischen den Zylindern zu betätigen. Durch die Anordnung der beiden Klappenarten jeweils auf einer Welle und die Lagerung aller Wellen auf einem gemeinsamen Klappenflansch wird der Aufbau und die Montage einer solchen Brennkraftmaschine weiter vereinfacht.

## Patentansprüche

1. Hubkolben-Brennkraftmaschine mit einer ersten und einer zweiten von einem Ansaugrohr ausgehenden Einlaßkanaleinrichtung pro Zylinder und mindestens einem an der Brennkammer des jeweiligen Zylinders angeordneten Einlaßventil pro Einlaßkanaleinrichtung, wobei die erste Einlaßkanaleinrichtung einen Füllkanal und die zweite Einlaßkanaleinrichtung einen Drallkanal bilden, mindestens einem Auslaßventil pro Zylinder mit einer sich daran anschließenden Auslaßkanaleinrichtung, einer Kraftstoffzuführeinrichtung zum dosierten Einbringen von Kraftstoff in den Brennraum jedes Zylinders, mit einer ersten Schaltklappe in jeweils der ersten Einlaßkanaleinrichtung zum Abschalten des Füllkanales in Abhängigkeit von den Betriebsbedingungen der Brennkraftmaschine und mit einer Abgasrückführeinrichtung mit einem von der Auslaßkanaleinrichtung zu den zweiten Einlaßkanaleinrichtungen verlaufenden mit einem Abgasrückführventil gesteuerten Abgasrückführkanal, und einem an diesen anschließenden mit Öffnungen zumindest zu den Drallkanälen versehenen Abgasführungskanal, **dadurch gekennzeichnet, daß** im Verlauf des Abgasführungskanals (13) vor den Öffnungen (12) zu den jeweiligen Drallkanälen (6) jeweils eine zweite Schaltklappe (17) vorgesehen ist, die mechanisch mit der ersten Schaltklappe (16) des jeweiligen ersten Einlaßsystems (3) so verbunden ist, daß bei geschlossener erster Schaltklappe (16) die zweite Schaltklappe (17) offen ist und bei geöffneter erster Schaltklappe (16) die zweite Schaltklappe (17) geschlossen ist.

2. Brennkraftmaschine nach Anspruch 1, **dadurch gekennzeichnet, daß** in Strömungsrichtung gesehen jeweils, nach der zweiten Schaltklappe (17) ein Verbindungskanal vom Abgasführungskanal (13) zu einer vor der ersten Schaltklappe (16) befindlichen Abgaszuführöffnung im Füllkanal (5) vorgesehen ist.

3. Brennkraftmaschine nach Anspruch 1 oder 2, **dadurch gekennzeichnet, daß** die benachbarten ersten (16) und zweiten Schaltklappen (17) auf jeweils einer gemeinsamen Welle (19) angeordnet und jeweils symmetrisch zur Achse der Welle (19) ausgebildet sind und die Wellen (19) über einen von einem Motorsteuersystem angesteuerten Aktuator in Abhängigkeit von den Betriebsbedingungen der Brennkraftmaschine zusammen betätigbar sind.

4. Brennkraftmaschine nach einem oder mehreren der Ansprüche 1 bis 3, **dadurch gekennzeichnet, daß** die die Schaltklappen (16, 17) tragenden Wellen (19) aller Zylinder (2) oder einer Gruppe von Zylindern in einem zwischen Ansaugrohr (11) und Zylinderkopf (1) angeordneten Klappenflansch (20) gelagert sind, der an seinen an der benachbarten Wand des Zylinderkopfes (1) und des Ansaugrohres (11) anliegenden Flächen mit Rinnen (24) versehen ist, die gemeinsam mit den benachbarten Wänden den Abgasführungskanal (13) bilden.

## Claims

1. Reciprocating-piston internal combustion engine with a first and a second inlet port device for each cylinder which start from an intake pipe and with at least one inlet valve for each inlet port device which is arranged on the combustion chamber of the respective cylinder, wherein the first inlet port device forms a filling channel and the second inlet port device forms a swirl channel, at least one exhaust valve for each cylinder with an exhaust port device adjoining it, a fuel delivery device for the metered introduction of fuel into the combustion chamber of each cylinder, with a first shut-off flap in each case in the first inlet port device for shutting off the filling channel as a function of the operating conditions of the internal combustion engine and with an exhaust recirculation device with an exhaust recirculation channel running from the exhaust port device to the second inlet port devices and controlled with an exhaust recirculation valve, and an exhaust conduction channel adjoining the exhaust recirculation channel and provided with openings at least to the swirl channels, **characterised in that**, in the course of the exhaust conduction channel (13), in front of the openings (12) to the respective swirl channels (6) in each case is provided a second shut-off flap (17) which is mechanically connected to the first shut-off flap (16) of the respective first inlet system (3) in such a way that, when the first shut-off flap (16) is closed, the second shut-off flap (17) is open, and when the first shut-off flap (16) is open, the second shut-off flap (17) is closed.

2. Internal combustion engine according to claim 1,
**characterised in that**, seen in the direction of flow, in each case after the second shut-off flap (17) is provided a connecting channel from the exhaust conduction channel (13) to an exhaust delivery opening in the filling channel (5) located in front of the first shut-off flap (16).

3. Internal combustion engine according to claim 1 or 2, **characterised in that** the adjacent first (16) and second (17) shut-off flaps are arranged in each case on a common shaft (19) and designed in each case symmetrically to the axis of the shaft (19), and the shafts (19) can be actuated together via an actuator controlled by an engine control system as a function of the operating conditions of the internal combustion engine.

4. Internal combustion engine according to one or more of claims 1 to 3, **characterised in that** the shafts (19) of all cylinders (2) or of a group of cylinders which carry the shut-off flaps (16, 17) are mounted in a flap flange (20) which is arranged between intake pipe (11) and cylinder head (1) and which, on its surfaces abutting against the adjacent wall of the cylinder head (1) and intake pipe (11), is provided with channels (24) which together with the adjacent walls form the exhaust conduction channel (13).

## Revendications

1. Moteur à combustion interne à pistons alternatifs, avec pour chaque cylindre un premier et un deuxième moyens formant conduits d'admission, partant d'une tubulure d'aspiration, et avec pour chaque moyen formant conduit d'admission au moins une soupape d'admission associée à la chambre de combustion du cylindre respectif, le premier moyen formant conduit d'admission constituant un conduit de charge et le deuxième moyen formant conduit d'admission constituant un conduit de tourbillonnement, avec pour chaque cylindre au moins une soupape d'échappement à laquelle se raccorde un moyen formant conduit d'échappement, avec un moyen d'alimentation en carburant pour l'apport dosé de carburant dans la chambre de combustion de chaque cylindre, avec un premier clapet de commutation dans le premier moyen respectif formant conduit d'admission pour désactiver le conduit de charge en fonction des conditions de fonctionnement du moteur à combustion interne, et avec un moyen de recirculation des gaz d'échappement, avec un conduit de recirculation des gaz d'échappement s'étendant du moyen formant conduit d'échappement aux deuxièmes moyens formant conduits d'admission et commandé par une soupape de recirculation des gaz d'échappement, et avec un conduit de guidage des gaz d'échappement se raccordant au conduit de recirculation des gaz d'échappement et pourvu d'ouvertures au moins vers les conduits de tourbillonnement, **caractérisé en ce que**, le long du conduit (13) de guidage des gaz d'échappement, un deuxième clapet de commutation respectif (17) est prévu avant les ouvertures (12) menant aux conduits de tourbillonnement respectifs (6), clapet qui est relié mécaniquement au premier clapet de commutation (16) du premier système d'admission respectif(3) de telle sorte que le deuxième clapet de commutation (17) est ouvert lorsque le premier clapet de commutation (16) est fermé et que le deuxième clapet de commutation (17) est fermé lorsque le premier clapet de commutation (16) est ouvert.

2. Moteur à combustion interne selon la revendication 1, **caractérisé en ce que**, selon la direction d'écoulement, il est respectivement prévu après le deuxième clapet de commutation (17) un conduit de liaison allant du conduit (13) de guidage des gaz d'échappement à une ouverture d'apport de gaz d'échappement se trouvant avant le premier clapet de commutation (16) dans le conduit de charge (5).

3. Moteur à combustion interne selon la revendication 1 ou 2, **caractérisé en ce que** les premiers (16) et deuxièmes (17) clapets de commutation voisins sont respectivement associées à un arbre commun (19) et sont respectivement réalisés symétriques par rapport à l'axe de l'arbre (19), et les arbres (19) peuvent, au moyen d'un actionneur asservi par un système de commande du moteur, être conjointement actionnés en fonction des conditions de fonctionnement du moteur à combustion interne.

4. Moteur à combustion interne selon une ou plusieurs des revendications 1 à 3, **caractérisé en ce que** les arbres (19), portant les clapets de commutation (16, 17), de tous les cylindres (2) ou d'un groupe de cylindres sont montés dans une bride à clapets (20) disposée entre la tubulure d'aspiration (11) et la culasse (1), bride qui est pourvue, sur ses faces appliquées contre la paroi voisine de la culasse (1) et de la tubulure d'aspiration (11), de rigoles (24) qui forment conjointement avec les parois voisines le conduit (13) de guidage des gaz d'échappement.
